# EUROPÄISCHE PATENTSCHRIFT

(11) **EP 3 520 087 B1**
(45) Veröffentlichungstag und Bekanntmachung des Hinweises auf die Patenterteilung: **21.02.2024**
(21) Anmeldenummer: 17771477.1
(22) Anmeldetag: 27.09.2017
(51) Int. Cl.: G07B 17/00, G06Q 50/32, G07C 9/00, A47G 29/14, G07C 9/38, A47G 29/20, A47G 29/16

(54) **ASSISTENZSYSTEM FÜR DIE ZUSTELLUNG VON POSTSENDUNGEN**
ASSISTANCE SYSTEM FOR THE DELIVERY OF MAIL
SYSTÈME D'AIDE À LA DISTRIBUTION D'ENVOIS POSTAUX

(30) Priorität: 30.09.2016 EP 16191702
(43) Veröffentlichungstag der Anmeldung: 07.08.2019
(73) Patentinhaber: INVENTIO AG, 6052 Hergiswil (CH)
(72) Erfinder: FRIEDLI, Paul, 5453 Remetschwil (CH)
(74) Vertreter: Inventio AG
(86) Internationale Anmeldenummer: PCT/EP2017/074537
(87) Internationale Veröffentlichungsnummer: WO 2018/060274

(56) Entgegenhaltungen:
- EP-A1- 2 835 078
- WO-A1-2013/169114
- GB-A- 2 362 188
- US-A1- 2003 023 870
- US-A1- 2003 154 891
- US-A1- 2005 075 988
- US-A1- 2016 275 741

## Beschreibung

### Beschreibung

Die hier beschriebene Technologie betrifft allgemein die Zustellung von Postsendungen an Gebäuden, beispielsweise durch einen Postboten oder einen Angestellten eines anderen Zustelldienstleisters. Ausführungsbeispiele der Technologie betreffen insbesondere ein Verfahren zum Betreiben eines Assistenzsystems.

Ein beispielhafter Bestell- und Lieferprozess ist in US 2003/154891 A1 offenbart. Gemäss diesem Prozess wird während dem Bestellprozesses ein Liefercode zum Händler übermittelt. Der Händler übergibt ein Paket mit dem Liefercode einem Lieferanten, wobei der Liefercode auf einem Adressaufkleber aufgedruckt sein kann, sodass der Lieferant ihn ablesen und in ein elektronisches Schloss am Briefkasten eingeben kann. Der Liefercode kann maschinenlesbar sein.

In einem Gebäude mit einer Vielzahl von Parteien erfolgt die Zustellung von Postsendungen (z.B. Briefe, Päckchen und Pakete) üblicherweise an einem zentralen Ort innerhalb oder ausserhalb des Gebäudes. An diesem Ort befindet sich eine für die Parteien und Zusteller zugängliche Briefkastenanlage mit einzelnen Briefkästen oder Brieffächern. In diese Briefkästen deponiert der Zusteller die für die einzelnen Parteien adressierten Postsendungen, wobei eine Partei mehrere Adressaten haben kann (z.B. Personen einer Familie oder einer Firma). Anhängig vom Briefkastenformat eines Landes wirft der Zusteller beispielsweise Briefe durch einen Briefkastenschlitz und deponiert etwas grössere Postsendungen in einem benachbarten Paketfach des Briefkastens. Da die Anzahl der Briefkästen üblicherweise der Anzahl der Parteien im Gebäude entspricht, ist die Zustellung in Gebäuden mit vielen Parteien zeitaufwendig. Ist die Briefkastenanlage zudem innerhalb eines Gebäudes angeordnet, benötigt der Zusteller u.U. einen Schlüssel, um ins Gebäude zu gelangen. Dies bedeutet, dass der Zusteller u.U. für eine Vielzahl von Gebäuden Schlüssel mit sich tragen muss. Es besteht daher Bedarf an einer Technologie, die die Zustellung von Postsendungen effizienter und zeitsparender auszuführen erlaubt.

Ein Aspekt einer solchen Technologie betrifft ein Verfahren zum Betreiben eines Postzustellungsassistenzsystems, das einen Briefkasten zur Aufnahme von Postsendungen, eine Datenverarbeitungseinrichtung mit einer Datenbank, die eine Adressendatei umfasst, in der jeweils ein Adressat einer Gebäudeadresse zugeordnet ist, und ein Lesegerät zum Erfassen von Postsendungsdaten einer Postsendung umfasst. Bei der Zustellung einer an einen Adressaten adressierte Postsendung an einem Gebäude werden Postsendungsdaten der Postsendung durch das Lesegerät erfasst, und der Adressat der Postsendung wird basierend auf den Postsendungsdaten bestimmt. Ein Standort des Lesegeräts wird bestimmt, wobei dem Standort des Lesegeräts die Gebäudeadresse zugeordnet wird. Die Datenverarbeitungseinrichtung prüft, ob der Adressat der Postsendung in der Adressendatei der dem Standort des Lesegeräts zugeordneten Gebäudeadresse des Gebäudes zugeordnet ist. Wenn der Adressat in der Adressendatei der dem Standort des Lesegeräts zugeordneten Gebäudeadresse des Gebäudes zugeordnet ist, wird ein Verriegelungsmechanismus des Briefkastens aktiviert, um eine Öffnung des Briefkastens freizugeben, damit die Postsendung im Briefkasten deponiert werden kann.

In der vorliegenden Beschreibung der Technologie wird der Begriff "Briefkasten" verwendet, weil er üblicherweise in Verbindung mit der Zustellung von gegenständlichen Postsendungen verwendet wird, insbesondere wenn die Zustellung an der Adresse des Wohnorts oder Geschäftssitzes eines Adressaten erfolgt. Der Fachmann erkennt, dass ein Briefkasten je nach Land und/oder Aufstellungsort unterschiedlich gestaltet sein kann. An einem Gebäude kann er als eine Art Kasten an einer Aussenwand befestigt oder freistehend vor dem Gebäude angeordnet sein. An einem Gebäude kann von ausserhalb aber auch nur ein Verschluss, z.B. ein Schlitz oder eine Klappe sichtbar sein, während ein Behältnis zur Aufnahme der Postsendung in der Gebäudewand oder an einer Innenseite der Gebäudewand angeordnet ist. Der Begriff "Briefkasten" und damit verbundene Terminologie (z.B. eine Postsendung "einwerfen") sind daher nicht als Beschränkung auf eine bestimmte Ausführung eines Behältnisses zur Aufnahme von Postsendungen zu verstehen.

Die hier beschriebene Technologie unterstützt einen Zusteller vor Ort, d.h. an einem Gebäude, bei der Zustellung von Postsendungen. Eine Postsendung kann z.B. ein einzelner Brief, Zeitschrift oder Zeitung, ein Bündel von mehreren Briefen, Zeitschriften oder Zeitungen für einen Adressaten oder eine Partei, ein Päckchen oder ein Paket sein. Für jede Postsendung wird überprüft, ob sie für eine im Gebäude registrierte Partei bzw. Adressaten bestimmt ist. Nur dann, wenn dies der Fall ist, wird das Deponieren der Postsendung in einem Briefkasten erlaubt. Andernfalls kann der Zusteller einen Hinweis erhalten, dass die Partei bzw. der Adressat in diesem Gebäude nicht registriert bzw. bekannt ist. Anstatt in eine Vielzahl von einzelnen Briefkästen, deponiert der Zusteller die Postsendungen für alle Parteien des Gebäudes in einen einzigen Briefkasten. Dieser Briefkasten kann für dieses Gebäude z.B. ein zentraler oder ein Gemeinschaftsbriefkasten sein. Die darin deponierten Postsendungen können gebäudeintern verteilt werden oder stehen den Parteien/Adressaten zur Abholung bereit.

Die Technologie erlaubt eine flexible Ausgestaltung des Assistenzsystems, um es an gewünschte Anforderungen anpassen zu können. In einem Ausführungsbeispiel ist das Lesegerät im Gebäude angeordnet und über eine Datenleitung mit der Datenverarbeitungseinrichtung verbunden. Das Lesegerät kann z.B. mit dem Briefkasten verbunden (z.B. als Teil des Briefkastens) oder als separate Einheit abgesetzt davon im oder am Gebäude angeordnet sein. Ist das Lesegerät ein Teil des Briefkastens, vereinfacht sich die Installation des Briefkastens, weil eine Verkabelung zwischen dem Briefkasten und dem Lesegerät entfällt.

In einem anderen Ausführungsbeispiel ist das Lesegerät in einem mobilen elektronischen Gerät integriert, das der Zusteller mit sich trägt. Über eine Funkverbindung kann das elektronische Gerät mit der Datenverarbeitungseinrichtung kommunizieren. Das elektronische Gerät kann z.B. ein mobiles Telefon, Smartphone oder Tablet PC sein. Diese an sich bekannten Geräte sind mit einer Digitalkamera ausgestattet und für Anwendungen gemäss der hier beschriebenen Technologie angepasst, beispielsweise ist ein Smartphone mit entsprechender Software ausgestattet.

Unabhängig davon, ob das Lesegerät Teil des Briefkastens oder in einem mobilen elektronischen Gerät integriert ist, umfasst das Lesegerät in einem Ausführungsbeispiel eine Digitalkamera, die ein digitales Bild von einem Adressfeld einer Postsendung erzeugt. Das digitale Bild umfasst die Postsendungsdaten der Postsendung. Das elektronische Bild wird anschliessend ausgewertet, um den Adressaten der Postsendung zu ermitteln. Die Auswertung kann mit Hilfe einer Software zur Erkennung von Zeichen (z.B. Optical Character Recognition (OCR) Software) erfolgen, die im mobilen elektronischen Gerät oder in der Datenverarbeitungseinrichtung ausgeführt wird. In beiden Fällen erfolgt die Auswertung dann nicht im Briefkasten, so dass der Briefkasten als einfachere Einheit herstellbar ist, die z.B. lediglich ein elektrisches Steuersignal in eine mechanische Aktion (d.h. Entriegeln des Briefkastens mittels eines Aktuators und evtl. Öffnen eines Verschlusses) umsetzt. Der Briefkasten kann daher je nach Anwendung mit mehr oder weniger (bzw. keiner) Datenverarbeitungskapazität ausgestattet sein.

Damit ein elektronisches Gerät Zeichen mittels OCR Software automatisch erkennen kann, ist das elektronische Gerät mit ausreichender Rechenleistung auszustatten. Höhere Rechenleistung bedeutet oft auch höhere Komplexität und höheren Stromverbrauch, was vor allem für mobile elektronische Geräte kritisch ist. Es kann daher ein Vorteil sein, das digitale Bild in der Datenverarbeitungseinrichtung auszuwerten, für die als stationäre Einrichtung geringere Anforderungen bzgl. Komplexität und Stromverbrauch bestehen. In diesem Fall sendet das Lesegerät das elektronische Bild zur Auswertung an die Datenverarbeitungseinrichtung.

Die Technologie erlaubt auch Flexibilität hinsichtlich der Anordnung der Datenverarbeitungseinrichtung. In einem Ausführungsbeispiel ist die Datenverarbeitungseinrichtung im Gebäude angeordnet, in einem anderen Ausführungsbeispiel ist sie entfernt vom Gebäude angeordnet. In beiden Beispielen ist die Datenverarbeitungseinrichtung über ein Datennetz (z.B. eine Datenleitung) mit dem Lesegerät verbunden. Die Datenverarbeitungseinrichtung kann Teil eines Gebäudemanagementsystems sein, das gebäudespezifische Funktionen (z.B. Gebäudesicherheit, Zugangskontrolle und Personen-/Mieterverwaltung) ausführt. Die in der Datenverarbeitungseinrichtung gespeicherte Adressendatei umfasst z.B. nur die in diesem Gebäude registrierten Adressaten. Diese Ausführungsbeispiele können von Vorteil sein, wenn ein lokales oder gebäudespezifisches Assistenzsystem geschaffen werden soll.

In einem weiteren Ausführungsbeispiel kommuniziert die Datenverarbeitungseinrichtung mit dem Lesegerät bei der Zustellung einer Postsendung über ein Kommunikationsnetz, das ein Funknetz umfasst. Das Kommunikationsnetz kann z.B. das Internet umfassen Die Adressendatei dieser Datenverarbeitungseinrichtung speichert z.B. die Adressaten von mehreren Gebäuden (z.B. in mindestens einer Stadt oder mindestens einem Land). Dieses Ausführungsbeispiel kann von Vorteil sein, wenn ein globales Assistenzsystem geschaffen werden soll.

Hierzu ist anzumerken, dass die Begriffe "lokales" und "globales" Assistenzsystem zur beispielhaften Erläuterung von Ausführungsbeispielen verwendet werden. Ein Fachmann erkennt, dass der Umfang der in einer Adressendatei gespeicherten Adressaten je nach Anwendung gewählt werden kann.

In einem Ausführungsbeispiel des Assistenzsystems wird ein Standort des Lesegeräts (Zustellers) bzw. des Gebäudes bestimmt. Dazu ist das mobile elektronische Gerät in einem Ausführungsbeispiel mit einem Modul zur Positionsbestimmung ausgestattet, das das Global Positioning System, GPS, nutzt. In einem anderen Ausführungsbeispiel hat das Assistenzsystem zusätzlich eine gebäudeseitige Funkeinrichtung, die mit dem mobilen elektronischen Gerät kommuniziert, z.B. ein Datensignal aussendet, das das Gebäude identifiziert oder zur Identifikation des Gebäudes genutzt werden kann. In einem Ausführungsbeispiel sendet die Funkeinrichtung eine Kennung aus, die in einer Datenbank einem Gebäude zugeordnet ist. Das mobile elektronische Gerät nutzt diese Kennung, um auf die Datenbank zuzugreifen, z.B. sendet das mobile elektronische Gerät die Kennung an einen Server, der die Datenbank nach dieser Kennung durchsucht und die dazugehörigen Standortdaten an das mobile elektronische Gerät sendet. Somit besteht Flexibilität auch hinsichtlich der Bestimmung des Standorts.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung eines ersten Anwendungsbeispiels eines Assistenzsystems für die Zustellung von Postsendungen;
- Fig. 2: eine schematische Darstellung eines zweiten Anwendungsbeispiels eines Assistenzsystems für die Zustellung von Postsendungen;
- Fig. 3: ein Ablaufdiagram eines Ausführungsbeispiels eines Verfahrens zum Betreiben des Assistenzsystems;
- Fig. 4A: ein Signaldiagramm eines beispielhaften Austauschs von Signalen zwischen einem Gebäudeserver, einem Lesegerät und einem Gebäude oder Briefkasten;
- Fig. 4B: ein Signaldiagramm eines beispielhaften Austauschs von Signalen zwischen einem Webserver, einem Lesegerät und einem Gebäude oder Briefkasten;
- Fig. 4C: ein Signaldiagramm eines beispielhaften Austauschs von Signalen zwischen einem Gebäudeserver, einem Gebäudeserver, einem Lesegerät und einem Gebäude oder Briefkasten;
- Fig. 5: eine schematische Darstellung eines Briefkastens für Anwendungsbeispiele mit und ohne Verwendung eines Lesegerätes;
- Fig. 6A: ein Signaldiagramm eines beispielhaften Austauschs von Signalen zwischen einem Gebäudeserver und einem Gebäude oder Briefkasten; und
- Fig. 6B: ein Signaldiagramm eines beispielhaften Austauschs von Signalen zwischen einem Webserver und einem Gebäude oder Briefkasten.

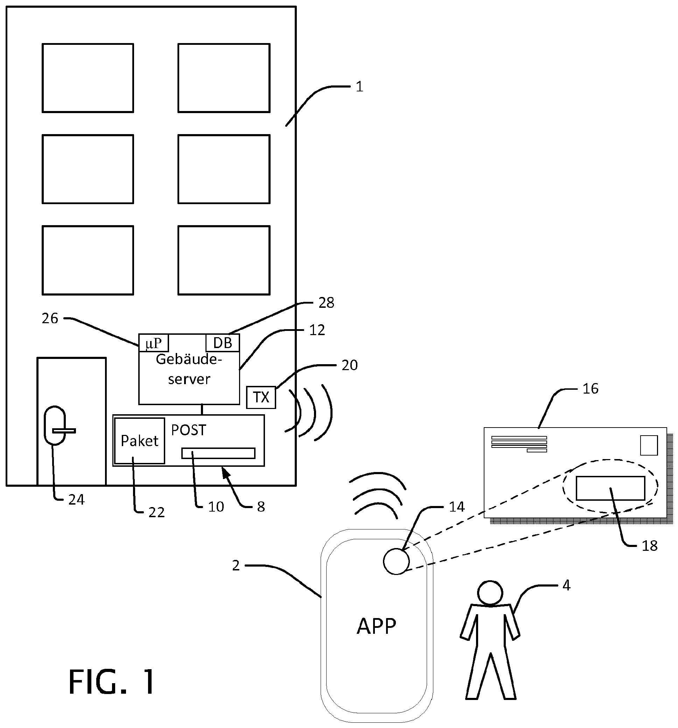

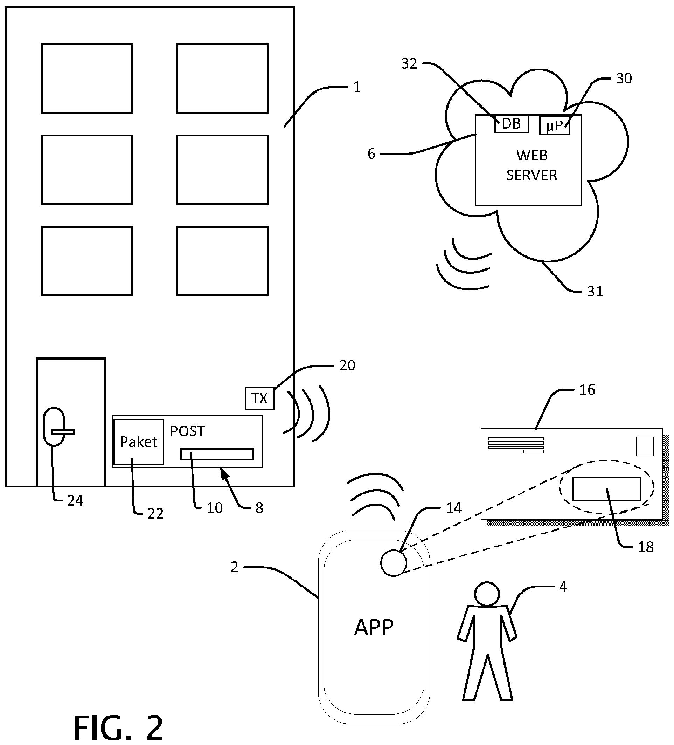

Fig. 1 und Fig. 2 zeigen zwei Anwendungsbeispiele eines Assistenzsystems für die Zustellung von Postsendungen 16 an einem Gebäude 1 durch einen Zusteller 4. Im in Fig. 1 gezeigten ersten Anwendungsbeispiel verarbeitet das Assistenzsystem Daten lokal, beispielsweise durch eine im Gebäude 1 angeordnete Datenverarbeitungseinheit 12 (im Folgenden auch Gebäudeserver 12 genannt). Im in Fig. 2 gezeigten zweiten Anwendungsbeispiel sendet das Assistenzsystem Daten über ein Kommunikationsnetzwerk 31 zu einer entfernt angeordneten Datenverarbeitungseinheit 6 (im Folgenden auch Webserver 6 genannt), um dort die Daten zu verarbeiten. Das Kommunikationsnetzwerk 31 ermöglicht in einem Ausführungsbeispiel eine Kommunikation über das Internet und umfasst ein Funknetz und dafür vorgesehene Netzwerkelemente.

In beiden Anwendungsbeispielen kann der Zusteller 4 ein Postbote oder ein Angestellter eines anderen Zustelldienstleisters (z.B. eines Paket- und/oder Kurierdienstes) sein. Der Zusteller 4 ist mit einem Lesegerät 2 ausgerüstet und befindet sich in der in Fig. 1 und Fig. 2 gezeigten Situation vor dem Gebäude 1. Das Gebäude 1 hat einen Briefkasten 8 mit einer Öffnung 10 zum Einwurf von Postsendungen 16, wobei der Briefkasten 8 von ausserhalb des Gebäudes 1 zugänglich ist; er kann jedoch auch nur von innerhalb des Gebäudes 1 für den Zusteller 4 zugänglich sein. In diesem Fall kann der Zusteller das Gebäude 1 durch eine Gebäudetür 24 betreten, um zum Briefkasten 8 zu gelangen.

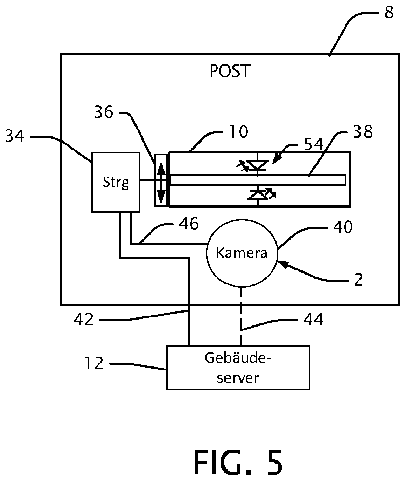

Die Öffnung 10 des Briefkastens 8 ist durch einen Verschluss 38 (s. Fig. 5), z.B. eine Tür, eine Blende, eine Klappe, einen Rollladen o.ä. verschliessbar. Je nach Ausgestaltung kann die Öffnung 10 mehr oder weniger weit geöffnet werden, beispielsweise kann sie für den Einwurf eines Briefs nur einen schmalen Schlitz freigeben. In der in Fig. 1 und Fig. 2 gezeigten Ausgestaltung hat der Briefkasten 8 ausserdem ein Paketfach 22, das ebenfalls durch einen Verschluss (z.B. Tür, Rollladen o.ä.) verschliessbar sein kann. In einer anderen Ausgestaltung kann das Paketfach 22 eine vom Briefkasten 8 getrennte Einheit sein, die an einer anderen für den Zusteller 4 zugänglichen Stelle im Gebäude 1 (Zutritt kann z.B. auch über die Gebäudetür 24 erfolgen) oder ausserhalb des Gebäudes 1 angeordnet ist.

Das vom Zusteller 4 mitgeführte Lesegerät 2 hat in den in Fig. 1 und Fig. 2 gezeigten Anwendungsbeispielen eine Kamera 14, insbesondere eine Digitalkamera mit CCD oder CMOS Bildsensoren, die ein (analoges) Bild eines Gegenstandes (hier: die Postsendung 16) in Bildpunkte (Pixel) zerlegen (Diskretisierung) und Farb-/Helligkeitsinformation in digitale Werte wandeln (Quantisierung). Dadurch wird für jedes Bild ein Datensatz gemäss einem bekannten Dateiformat (z.B. JPEG oder TIFF) erzeugt. Dieser Datensatz ist hier als "digitales Bild" bezeichnet. Die Kamera 14 oder das Lesegerät 2 speichert das digitale Bild zumindest bis zur anschiessenden Auswertung.

Die hier beschriebenen Ausführungsbeispiele des Assistenzsystems werten das von der Kamera 14 erzeugte digitale Bild mit Hilfe einer Software zur Texterkennung aus, um Zeichen oder Text in einem digitalen Bild automatisch zu erkennen. Diese Art von Texterkennung ist auch als optische Zeichenerkennung bekannt (Optical Character Recognition (OCR)). OCR Software wird z.B. von Nuance Communications, Inc., angeboten. Die erkannten Zeichen bzw. der erkannte Text können in einer Prozessoreinheit weiterverarbeitet werden. Die Texterkennung kann im Lesegerät 2 oder in einer der Datenverarbeitungseinrichtungen 6, 12 ausgeführt werden. Im letztgenannten Fall sendet das Lesegerät 2 das digitale Bild zum Prozessor des Webservers 32, damit dort die optische Zeichenerkennung erfolgt.

Das Lesegerät 2 kann auch ein Funkmodul für eine Nahfeldkommunikation und/oder ein Funkmodul für eine Kommunikation über das Kommunikationsnetzwerk 31 aufweisen. Die Nahfeldkommunikation kann z.B. gemäss einem Standard für Bluetooth, WiFi/WLAN oder RFID erfolgen. Das Kommunikationsnetzwerk 31 umfasst in einem Ausführungsbeispiel ein mobiles Kommunikationsnetz, z.B. gemäss einem Standard für GSM, LTE oder GPRP. Über das Kommunikationsnetzwerk 31 kann beispielsweise auf das Internet zugegriffen werden. Der Fachmann erkennt, dass die Funkmodule gemäss dem gewählten Kommunikationsstandard ausgelegt und programmiert sind.

Für die Nutzung der hier beschriebenen Technologie ist das Lesegerät 2 mit entsprechender Anwendungssoftware oder anwendungsspezifischer Software (auch als "App" bezeichnet) ausgestattet, die über ein graphisches Nutzerinterface (auch als Graphical User Interface, GUI, bezeichnet) bedienbar ist. Ein Aspekt dieser Anwendungssoftware betrifft das Erzeugen des digitalen Bildes eines Adressfeldes 18 der Postsendung 16, durch das die Postsendungsdaten erfasst werden. Ein anderer Aspekt dieser Anwendungssoftware betrifft die Kommunikation des Lesegeräts 2, beispielsweise mit dem Webserver 6 und dem Briefkasten 8. In einem Ausführungsbeispiel ist das Lesegerät 2 in einem Mobiltelefon oder Smartphone mit einer Kamera 14 und dazugehöriger Anwendungssoftware integriert. Bei derartigen elektronischen Geräten können die Bluetooth Funktion und die WiFi Funktion selektiv aktiviert werden.

In einem Ausführungsbeispiel prüft das Assistenzsystem, ob die Postsendung 16 in den Briefkasten 8 deponiert werden kann oder aufgrund ihrer Grösse in das Paketfach 22 zu deponieren ist. Dazu kann beispielsweise das Lesegerät 2 allein oder in Verbindung mit einer der Datenverarbeitungseinrichtungen 6, 12 verwendet werden. Die Kamera 14 des Lesegeräts 2 kann dazu z.B. in Verbindung mit einer 3D-Scanner Softwareanwendung als Scanner verwendet werden. Eine solche Anwendung ist z.B. in einer Medienmitteilung mit dem Titel "Smartphone wird zum 3D-Scanner" der ETH Zürich vom 5.12.2013 beschrieben. Bildverarbeitungssoftware wertet die 3D Abbildung mit Hilfe eines Mustererkennungsverfahrens aus, um zu entscheiden, ob es sich um einen Brief oder ein Paket handelt. Dabei kann auch die ungefähre Grösse der Postsendung 16 bestimmt werden. Damit kann entschieden werden, wo die Postsendung 16 zu deponieren ist. Ist die Postsendung 16 im Paketfach 22 zu deponieren, erhält der Zusteller 4 eine entsprechende Benachrichtigung. Aus der Bildverarbeitung ergibt sich in einem Ausführungsbeispiel auch, wie dick die Postsendung 16 und wie weit die Öffnung 10 zu öffnen ist.

In den in Fig. 1 und Fig. 2 gezeigten Situationen ist die hier beschriebene Technologie in vorteilhafter Weise bei der Zustellung einer Postsendung 16 am Gebäude 1 anwendbar. Kurz und beispielhaft zusammengefasst erfolgt die Zustellung wie folgt: Der Zusteller 4 befindet sich vor dem Gebäude 1 und richtet beispielsweise die Kamera 14 auf das Adressfeld 18 der Postsendung 16. Die Kamera 14 erzeugt davon ein digitales Bild, um die Postsendungsdaten zu erfassen. Je nach Ausführungsbeispiel wertet entweder das mobile elektronische Gerät das digitale Bild aus oder es sendet das digitale Bild zur Auswertung zur Datenverarbeitungseinrichtung (je nach Ausgestaltung ist diese im Webserver 6 oder im Gebäudeserver 12 angeordnet), um den Adressaten der Postsendung 16 zu ermitteln. Die Datenverarbeitungseinrichtung erkennt, dass der Zusteller 4 die Postsendung 16 am Gebäude 1 zustellen möchte, und prüft, ob der Adressat in diesem Gebäude 1 registriert ist. Ist dies der Fall, wird die Öffnung 10 entriegelt und der Zusteller 4 kann die Postsendung 16 im Briefkasten 8 deponieren (z.B. einwerfen). Die Datenverarbeitungseinrichtung kann dafür einen elektronischen Code oder Schlüssel erzeugen und an das Lesegerät 2 senden, mit dem es die Öffnung 10 entriegeln kann. Ist dagegen der Adressat nicht registriert, bleibt die Öffnung 10 geschlossen. In diesem Fall kann der Zusteller 4 benachrichtigt werden, dass die Postsendung 16 dem Adressaten in diesem Gebäude 1 nicht zugestellt werden kann.

Das Assistenzsystem erkennt, an welchem Gebäude 1 der Zusteller 4 die Postsendung 16 zustellen möchte. Dafür kann eine von verschiedenen Technologien zur Anwendung kommen. Zum einen kann das Lesegerät 2 seine Position mit Hilfe eines Positionsbestimmungssystems, beispielsweise dem Global Positioning System, GPS, und damit auch den Standort des Zustellers 4 bestimmen. Das Assistenzsystem nutzt den Standort des Zustellers 4 und Kartenmaterial (z.B. Landkarten und/oder Stadtpläne), um dessen Standort einem Gebäude 1 zuzuordnen. Zum anderen kann eine in Fig. 1 und Fig. 2 gezeigte Funkeinrichtung 20, die Teil des Briefkastens 8 oder als separate Einheit im oder am Gebäude 1 angeordnet sein kann, zur Positionsbestimmung verwendet werden. Die Funkeinrichtung 20 kann z.B. für Bluetooth, WiFi/WLAN oder RFID Technologie ausgestattet sein. Je nach Anwendungsfall, kann die Funkeinrichtung 20 Funksignale senden und/oder empfangen. In einem Ausführungsbeispiel umfasst die Funkeinrichtung 20 ein Funkmodul, das auf Bluetooth Technologie basiert. Die Funkeinrichtung 20 sendet kontinuierlich eine individuelle Kennung (z. B. "ID=5") aus, die das Lesegerät 2 empfängt, wenn es in Funkreichweite ist. Das Lesegerät 2 (bzw. eine installierte Softwareanwendung) nutzt die empfangene Kennung, um beispielsweise mittels einer Funkverbindung auf eine Datenbank zuzugreifen, in der die Kennung mit Daten zu einem Gebäude 1 (oder einem Briefkasten 8), an dem die Funkeinrichtung 20 angeordnet ist, verknüpft ist. Die Datenbank speichert z.B. eine Vielzahl von Datensätzen, wobei in jedem Datensatz eine bestimmte Kennung einem bestimmten Gebäude (z.B. definiert durch Hausnummer, Strasse, Ort Postleizahl und Land) zugeordnet ist.

Im Anwendungsbeispiel gemäss Fig. 1 ist die Datenverarbeitungseinheit 12 im Gebäude 1 angeordnet. Die Datenverarbeitungseinheit 12 kann auch entfernt vom Gebäude 1 angeordnet (z.B. in einer Service- oder Gebäudemanagementzentrale) und mit diesem kommunikativ verbunden sein, um gebäudespezifische Funktionen (z.B. betreffend Gebäudesicherheit, Zugangskontrolle und Nutzerverwaltung) für dieses Gebäude 1 auszuführen. In einem solchen Fall erfolgt die Kommunikation zwischen der Datenverarbeitungseinrichtung 12 und den verschiedenen Einheiten und Vorrichtungen im Gebäude 1 (z.B. Briefkasten 8) über ein Kommunikationsnetzwerk, z. B. das Internet und/oder ein WAN).

Wie in Fig. 1 angedeutet ist, kann in einer Ausgestaltung die Datenverarbeitungseinheit 12 mit dem Briefkasten 8 gekoppelt sein, um z.B. das Öffnen und Schliessen der Öffnung 10 zu steuern. In einer anderen Ausgestaltung kann die Datenverarbeitungseinheit 12 mit der Gebäudetür 24 gekoppelt sein, um diese bei Bedarf zu entriegeln, beispielsweise um den Zusteller 4 ins Gebäude 1 zu lassen, wenn der Briefkasten 8 nur von innerhalb des Gebäudes 1 zugänglich ist. Je nach Ausgestaltung kann die Datenverarbeitungseinheit 12 auch mit der Funkeinrichtung 20 gekoppelt sein, um an sie Daten zu senden und/oder Daten von ihr zu empfangen.

In Fig. 1 ist ausserdem gezeigt, dass die Datenverarbeitungseinheit 12 eine Prozessoreinheit 26 und eine Datenbank 28 aufweist. Die Datenbank 28 speichert die Namen der Parteien bzw. die Adressaten, die im Gebäude 1 registriert sind. Die Prozessoreinheit 26 ist programmiert, um verschiedene Funktionen und Aufgaben der Datenverarbeitungseinheit 12 auszuführen, beispielsweise empfängt sie die Postsendungsdaten (z.B. vom Briefkasten 8 gemäss Fig. 5 oder von der Funkeinrichtung 20), greift auf die in der Datenbank 28 gespeicherten Daten zu, prüft, ob es zu den Postsendungsdaten in der Datenbank 28 einen registrierten Adressaten gibt, und steuert das Entriegeln der Öffnung 10. Entsprechend dazu ist in Fig. 2 gezeigt, dass die Datenverarbeitungseinheit 6 eine Prozessoreinheit 30 und eine Datenbank 32 aufweist. Ähnlich wie die Prozessoreinheit 30 ist die Prozessoreinheit 26 programmiert, um verschiedene Funktionen und Aufgaben der Datenverarbeitungseinheit 6 auszuführen, beispielsweise empfängt sie die Postsendungsdaten (z.B. vom Lesegerät 2), greift auf die in der Datenbank 32 gespeicherten Daten zu, prüft, ob es zu den Postsendungsdaten in der Datenbank 28 einen passenden Adressaten gibt, und steuert das Entriegeln der Öffnung 10.

Ein weiteres Anwendungsbeispiel des Assistenzsystems ergibt sich aus einer Kombination der in Fig.1 und Fig. 2 gezeigten Anwendungsbeispiele. In diesem weiteren Anwendungsbeispiel hat das Assistenzsystem sowohl einen Webserver 6 (Fig. 2) als auch einen Gebäudeserver 12 (Fig. 1). In einem Ausführungsbeispiel sind der Webserver 6 und der Gebäudeserver 12 kommunikativ gekoppelt, beispielsweise über das Kommunikationsnetzwerk 31. Über dieses Kommunikationsnetzwerk 31 können der Webserver 6 und der Gebäudeserver 12 miteinander kommunizieren.

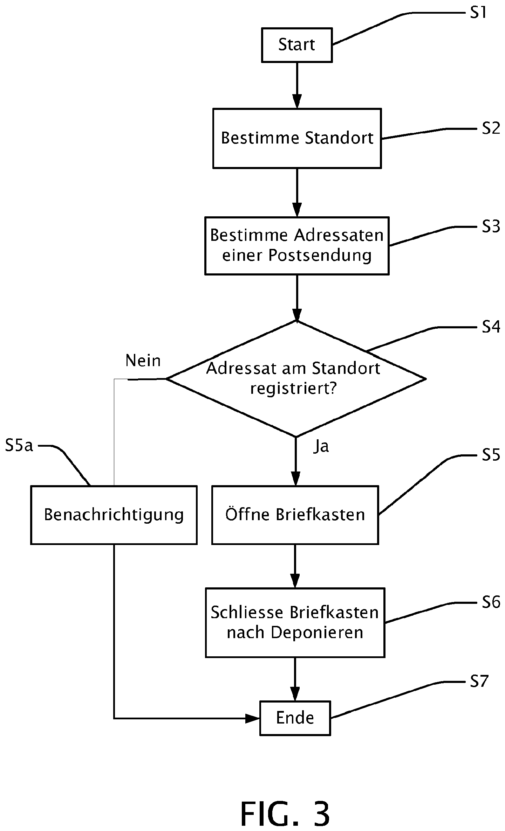

Mit dem Verständnis der oben beschriebenen prinzipiellen Systemkomponenten und deren Funktionalitäten, erfolgt im Folgenden anhand von Fig. 3 eine Beschreibung eines beispielhaften Verfahrens zum Betreiben eines Postzustellungsassistenzsystems. Die Beschreibung erfolgt mit Bezug auf eine in Fig. 1 und Fig. 2 gezeigte Situation, in der der Zusteller 4 vor dem Gebäude 1 steht und eine Postsendung 16 zustellen möchte. Der Zusteller 4 befindet sich dabei mit dem Lesegerät 2 in Funkreichweite zur Funkeinrichtung 20, d.h. das von der Funkeinrichtung 20 ausgesendete Funksignal hat am Standort des Zustellers 4 bzw. des Lesegeräts 2 (Empfangsort) eine Signalstärke (ausgedrückt durch einen RSSI-Wert (Received Signal Strength Indicator)), die grösser als ein für einen sicheren Empfang festgelegter RSSI-Schwellenwert ist. Der Zusteller 4 hat die Funktionen für eine Funkkommunikation (z.B. Bluetooth ist am Lesegerät 2 aktiviert) und die für die Zustellung vorgesehene Softwareanwendung bereits aktiviert. Das Verfahren beginnt in einem Schritt S1 und endet in einem Schritt S7.

In einem Schritt S2 wird der Standort des Zustellers 4 bestimmt. Dies kann wie oben beschrieben mittels GPS oder der Funkeinrichtung 20 erfolgen. Als Ergebnis dieser Standortbestimmung liegen Standortdaten vor, die beispielsweise aussagen, dass der Zusteller 4 vor dem Gebäude 1 mit einer bestimmten Hausnummer in einer bestimmten Strasse einer bestimmten Stadt steht. Die Standortdaten können eine, mehrere oder alle dieser Angaben umfassen. Die Standortbestimmung erfolgt automatisch und ohne Zutun des Zustellers 4; in einem Ausführungsbeispiel erfolgt sie automatisch durch die Softwareanwendung des Lesegeräts 2.

In einem Schritt S3 wird ein Adressat der Postsendung 16 bestimmt. Dazu positioniert der Zusteller 4 die Postsendung 16 und das Lesegerät 2 so, dass die Kamera 14 ein digitales Bild vom Adressfeld 18 der Postsendung 16 erzeugen kann. Eine OCR Software wertet das digitale Bild aus, damit die Postsendungsdaten elektronisch weiterverarbeitet werden können. Am Ende dieser Verarbeitung liegen Angaben zum Adressaten der Postsendung 16 vor. Die Angaben umfassen den Adressaten (Name der Person/Partei, an die die Postsendung 16 adressiert ist); je nach Ausgestaltung können sie die gesamte Anschrift mit Name, Strasse, Hausnummer, Ort und Land umfassen.

Zu den Schritten S2 und S3 ist anzumerken, dass sie in beliebiger Reihenfolge, einschliesslich zeitlich parallel zueinander, ausgeführt werden können.

In einem Schritt S4 wird überprüft, ob der in Schritt S3 bestimmte Adressat am in Schritt S2 bestimmten Standort des Zustellers 4 und somit des Gebäudes 1 registriert ist. Dazu prüft die Datenverarbeitungseinrichtung 6, 12, ob der Adressat in der ihr zugeordneten Datenbank 28, 32 dem durch die Standortdaten definierten Gebäude 1 zugeordnet ist. Ist dies der Fall, ist der Adressat in diesem Gebäude 1 registriert und das Verfahren schreitet entlang des Ja-Zweiges weiter zu einem Schritt S5. In einem Ausführungsbeispiel empfängt die Datenverarbeitungseinrichtung 6, 12 die Standortdaten und die Postsendungsdaten. Der Fachmann erkennt, dass je nach Ausgestaltung des Assistenzsystems die Postsendungsdaten auch die Standortdaten umfassen können.

Ist der Adressat in diesem Gebäude 1 jedoch nicht registriert, schreitet das Verfahren entlang des Nein-Zweiges weiter zu einem Schritt S5a. In Schritt S5a wird der Zusteller 4 darüber benachrichtigt. Die Benachrichtigung kann durch eine Textnachricht, ein akustisches Signal (z.B. ein Warn- oder Fehlerton) und/oder ein optisches Signal (z.B. durch Aktivierung einer farbigen (z.B. roten) LED) erfolgen. Je nach Ausgestaltung kann die Textnachricht auf einer Anzeige des Lesegeräts 2 oder des Briefkastens 8 dargestellt werden. Die akustischen und/oder optischen Signale können ebenfalls durch das Lesegerät 2 oder durch Einrichtungen am Briefkasten 8 erzeugt werden. Eine Benachrichtigung kann auch dadurch erfolgen, dass der Briefkasten 8 verriegelt bleibt und kein Deponieren der Postsendung 16 erlaubt.

In einem Ausführungsbeispiel informiert die auf der Anzeige des Lesegeräts 2 oder des Briefkastens 8 dargestellte Benachrichtigung den Zusteller 4 darüber, dass die Anschrift nicht erkannt werden konnte. Beispielsweise kann die Anschrift wegen Verschmutzung, verwischter Tinte, oder weil sie handschriftlich ist, ganz oder teilweise unleserlich sein. In diesem Fall kann der Zusteller 4 aufgefordert werden, die Anschrift manuell, z.B. am mobilen Gerät 2, einzugeben. Je nach Ausgestaltung kann der Zusteller 4 die Anschrift eintippen, oder das mobile Gerät 2 zeigt mögliche und bekannte Anschriften an, von denen der Zusteller 4 eine Anschrift auswählen kann. Diese Anschriften können in einer Vorschlagsliste aufgeführt sein, durch die der Zusteller 4 durchblättern (scrollen) kann. Nach dieser manuellen Eingabe kann im Schritt S4 die Überprüfung durchgeführt werden.

Nachdem der Adressat in Schritt S4 als im Gebäude 1 registriert erkannt wurde, wird der Briefkasten 8 in Schritt S5 entriegelt und geöffnet, so dass der Zusteller 4 die Postsendung 16 im Briefkasten 8 deponieren kann. Im in Fig. 1 gezeigten Anwendungsbeispiel kann die Datenverarbeitungseinrichtung 12 ein Steuersignal erzeugen, das einen Verriegelungsmechanismus 34, 36, 38 (s. Fig. 5) des Briefkastens 8 aktiviert, der daraufhin die Öffnung 10 freigibt, so dass der Zusteller 4 die Postsendung 16 deponieren kann. Die Freigabe der Öffnung 10 bleibt in einem Ausführungsbeispiel bestehen, bis die Postsendung 16 deponiert ist. Dazu kann an der Öffnung 10 eine Lichtschranke 54 (s. Fig. 5) so angeordnet sein, dass eine Hand des Zustellers 4 und/oder die Postsendung 16 während dem Deponieren den Lichtweg zuerst unterbricht und danach wieder freigibt. In einem anderen Ausführungsbeispiel wird die Öffnung 10 für eine festgelegte Zeitdauer (z.B. für wenige Sekunden) freigegeben, so dass der Zusteller 4 die Postsendung 16 deponieren kann. Nach Ablauf der festgelten Zeitdauer, wird der Briefkasten 8 wieder verriegelt.

Der Verriegelungsmechanismus 34, 36, 38 kann in einem anderen Ausführungsbeispiel ein Funkmodul enthalten, das zum Empfang eines (Funk)Steuersignals (z.B. eines elektronischen Codes oder Schlüssel) vom Lesegeräts 2 oder Webserver 6 dient. Wie an anderer Stelle beschrieben, kann der Verriegelungsmechanismus 34, 36, 38 beispielsweise die Weite eines Schlitzes in Abhängigkeit von der Grösse bzw. Dicke der Postsendung 16 einstellen.

Hat der Zusteller 4 die Postsendung 16 deponiert, wird der Briefkasten in einem Schritt S6 wieder geschlossen und verriegelt und das Verfahren endet im Schritt S7. In einem Ausführungsbeispiel erfolgt die Verriegelung automatisch sobald der Lichtweg wieder frei ist oder nach Ablauf der festgelegten Zeitdauer. Dadurch wird erreicht, dass der Briefkasten 8 nur zum Deponieren einer Postsendung 16, die an einen im Gebäude 1 registrierten Adressaten adressiert ist, entriegelt und geöffnet ist; das Risiko des fälschlichen Deponierens einer Postsendung 16 (z.B. ein Adressat wohnt nicht im Gebäude 1) und die Möglichkeit des Deponierens von nicht-adressierten Postsendungen (z.B. Werbung/Postwurfsendungen) werden reduziert. Ausserdem wird das Deponieren von Abfall o.ä. durch Vandalismus verhindert.

In einem Ausführungsbeispiel kann der Adressat benachrichtigt werden, dass für ihn eine Postsendung 16 deponiert wurde. Diese Benachrichtigung kann z.B. eine Textnachricht (z.B. SMS, Email) sein, die an eine für diesen Zweck hinterlegte Telefonnummer oder Email-Adresse geschickt wird.

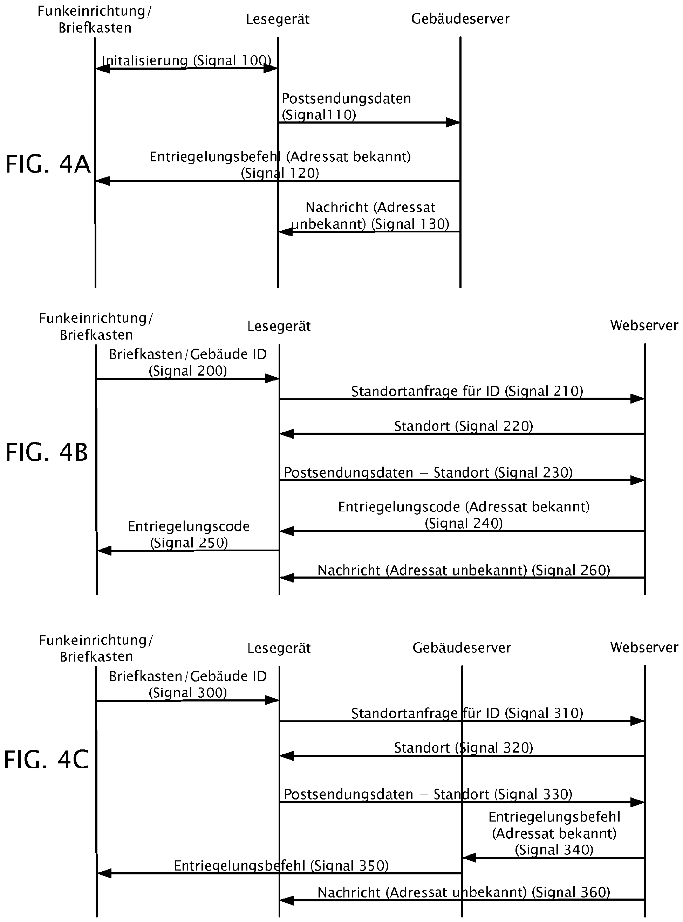

In Fig. 4A, Fig. 4B, Fig.4C, Fig. 5A und Fig. 5B sind verschiedene Ausführungsbeispiele von Verfahren zum Betreiben des Postzustellungsassistenzsystems anhand von Signaldiagrammen dargestellt. Sie zeigen den Signalaustausch zwischen einzelnen Einheiten/Komponenten des Assistenzsystems, die bei einer Ausführung eines Verfahrens beteiligt sind. Aus Darstellungsgründen sind der Briefkasten 8 und die Funkeinrichtung 20 nicht als getrennte Signalempfänger bzw. Signalsender gezeigt. Der Fachmann erkennt, dass die Funkeinrichtung 20 als Teil des Briefkastens 8 oder getrennt davon als zum Gebäude 1 gehörend aufgefasst werden kann.

Fig. 4A zeigt ein Signaldiagramm eines beispielhaften Austauschs von Signalen zwischen dem Gebäudeserver 12, dem Lesegerät 2 und dem Briefkasten 8 bzw. der Funkeinrichtung 20. Der dargestellte Signalaustausch kann z.B. im in Fig. 1 gezeigten Assistenzsystem erfolgen. Kommt der Zusteller 4 und damit das Lesegerät 2 in Funkreichweite der Funkeinrichtung 20 wird eine Funkverbindung zwischen dem Lesegerät 2 und der Funkeinrichtung 20 initialisiert (Signal 100). Die Initialisierung kann z.B. den Gebäudeserver 12 aktivieren und u.U. das Gebäude 1 gegenüber dem Lesegerät 2 identifizieren. Dies kann dem Zusteller 4 gegenüber als Bestätigung dafür dienen, dass er sich auch tatsächlich vor dem gewünschten Gebäude 1 befindet. Hat das Lesegerät 2 ein digitales Bild des Adressfeldes 18 erzeugt, sendet es das digitale Bild mit den Postsendungsdaten der Postsendung 16 zum Gebäudeserver 12 (Signal 110). Stellt der Gebäudeserver 12 nach Auswertung des digitalen Bildes mit der OCR Software fest, dass der Adressat der Postsendung 16 im Gebäude 1 registriert bzw. bekannt ist, sendet er ein Steuersignal, das einem Entriegelungsbefehl entspricht, zum Briefkasten 8 (Signal 120). Daraufhin ist der Briefkasten 8 entriegelt und geöffnet und der Zusteller 4 kann die Postsendung 16 im Briefkasten 8 deponieren. Ist der Adressat dagegen nicht im Gebäude 1 registriert bzw. unbekannt, wird der Zusteller 4 darüber informiert, beispielsweise sendet der Gebäudeserver 12 eine Nachricht zum Lesegerät 2 (Signal 130).

Fig. 4B zeigt ein Signaldiagramm eines beispielhaften Austauschs von Signalen zwischen dem Webserver 6, dem Lesegerät 2 und dem Briefkasten 8 bzw. der Funkeinrichtung 20. Der dargestellte Signalaustausch kann z.B. im in Fig. 2 gezeigten Assistenzsystem erfolgen. Kommt der Zusteller 4 und damit das Lesegerät 2 in Funkreichweite der Funkeinrichtung 20, die z.B. auf Basis von Bluetooth Technologie eine individuelle Kennung (ID) aussendet, empfängt es die Kennung des Briefkastens 8 oder des Gebäudes 1 (Signal 200). Das mobile elektronische Gerät 2 sendet eine Standortanfrage an den Webserver 6, der daraufhin den zu dieser Kennung registrierten Standort des Gebäudes 1 bzw. Briefkastens 8 ermittelt (Signal 210). Der Gebäudeserver 12 sendet die zum ermittelten Standort gehörenden Standortdaten zum Lesegerät 2 (Signal 220). Hat das Lesegerät 2 ein digitales Bild des Adressfeldes 18 mit den Postsendungsdaten erzeugt, sendet es dieses zusammen mit den Standortdaten zum Webserver 6 (Signal 230). Stellt der Webserver 6 nach Auswertung des digitalen Bildes mit der OCR Software fest, dass der Adressat der Postsendung 16 im Gebäude 1 registriert bzw. bekannt ist, erzeugt und sendet er einen Entriegelungscode (elektronischen Schlüssel) zum Lesegerät 2 (Signal 240). Das Lesegerät 2 sendet den Entriegelungscode zum Briefkasten 8 (Signal 250). Wird der Entriegelungscode als für den Briefkasten 8 gültig erkannt, wird der Briefkasten 8 entriegelt und geöffnet und der Zusteller 4 kann die Postsendung 16 im Briefkasten 8 deponieren. Ist der Adressat dagegen nicht im Gebäude 1 registriert bzw. unbekannt, wird der Zusteller 4 darüber informiert, beispielsweise sendet der Webserver 6 eine Nachricht zum Lesegerät 2 (Signal 260).

Fig. 4C zeigt ein Signaldiagramm eines beispielhaften Austauschs von Signalen zwischen dem Webserver 6, dem Gebäudeserver 12, dem Lesegerät 2 und dem Briefkasten 8 bzw. der Funkeinrichtung 20. Der dargestellte Signalaustausch kann z.B. in einem Assistenzsystem erfolgen, das sich aus einer Kombination der in Fig. 1 und Fig. 2 gezeigten Anwendungsbeispiele ergibt. Um Wiederholungen zu vermeiden wird hier nur auf Unterschiede zum in Fig. 4B gezeigten Signalverlauf eingegangen. Die in Fig. 4C gezeigten Signale 300 - 330 und 360 entsprechen den in Fig. 4B gezeigten Signalen 200 - 230 und 260. Empfängt der Webserver 6 die vom Lesegerät 2 gesendeten Postsendungsdaten und Standortdaten (Signal 230), prüft der Webserver 6, ob der Adressat der Postsendung 16 im Gebäude 1 registriert bzw. bekannt ist. Ist dies der Fall, sendet er einen Entriegelungsbefehl zum Gebäudeserver 12 (Signal 340). Der Gebäudeserver 12 steuert den Briefkasten 8 entsprechend dem Entriegelungsbefehl an (Signal 350). Daraufhin wird der Briefkasten 8 entriegelt und geöffnet und der Zusteller 4 kann die Postsendung 16 im Briefkasten 8 deponieren.

Der Fachmann erkennt, dass der in Fig. 4C dargestellte Signalaustausch in einem anderen Ausführungsbeispiel des Assistenzsystems modifiziert sein kann. In diesem Ausführungsbeispiel sendet der Webserver 6 den Entriegelungsbefehl direkt zum Briefkasten 8. Der Briefkasten 8 hat dafür eine Kommunikationseinrichtung, um den Entriegelungsbefehl empfangen zu können. Die Kommunikationseinrichtung kann eine Prozessoreinheit umfassen oder an eine solche gekoppelt sein, um aus dem Entriegelungsbefehl ein Steuersignal für den Verriegelungsmechanismus des Briefkastens 8 zu erzeugen.

Der Fachmann erkennt auch, dass der Standort nicht zwingend aus einer vom Lesegerät 2 empfangenen Kennung oder basierend auf einer Kommunikation zwischen der gebäudeseitigen Funkeinrichtung 20 und dem Lesegerät 2 bestimmt werden muss. Wie an anderer Stelle dieser Beschreibung erwähnt, kann zur Standortbestimmung auch die GPS Technologie eingesetzt werden. Ausserdem erkennt der Fachmann, dass die Auswertung des digitalen Bildes durch die OCR auch im Lesegerät 2 erfolgen kann.

Fig. 5 zeigt eine schematische Darstellung eines Ausführungsbeispiels eines Briefkastens 8, wie er in verschiedenen Anwendungsbeispielen des Assistenzsystems verwendet werden kann. In dieser Darstellung sind die Komponenten gezeigt, die für ein Verständnis der hier beschriebenen Technologie hilfreich erscheinen. Obwohl ein Behältnis zur Aufnahme von deponierten Postsendungen 16 in Fig. 5 nicht gezeigt ist, erkennt der Fachmann, dass deponierte Postsendungen 16 in einem Behältnis gesammelt werden und dort zur gebäudeinternen Weiterverteilung oder Abholung zur Verfügung stehen. Fig. 5 zeigt ausserdem die Koppelung des Briefkastens 8 mittels eines Datennetzes 42 an den Gebäudeserver 14. Das Datennetz 42 kann für drahtgebundene und/oder drahtlose Kommunikation ausgelegt sein.

Zu den in Fig. 5 gezeigten Komponenten gehören neben der Öffnung 10 eine Steuereinrichtung 34, ein Aktuator 36, ein Verschluss 38 und die Lichtschranke 54. Die Lichtschranke 54 ist an die Steuereinrichtung 34 gekoppelt und hat die an anderer Stelle beschriebene Funktion. Alternativ zur Lichtschranke 54 kann ein Näherungssensor verwendet werden, z.B. basierend auf Ultraschall oder kapazitiver Änderungen. Die Steuereinrichtung 34, der Aktuator 36 und der Verschluss 38 bilden in einer Ausgestaltung einen Verriegelungsmechanismus, der auf ein Steuersignal des Gebäudeservers 12 hin, den Verschluss 38 entriegelt und die Öffnung 10 freigibt, so dass eine Postsendung 16 deponiert werden kann. Der Aktuator 36 ist in einem Ausführungsbeispiel ein elektronisches Schloss mit einem Relais und einem Riegel, wobei das Relais als Reaktion auf ein Steuersignal der Steuereinrichtung 34 den Riegel und damit den Verschluss 38 freigibt. Der Zusteller 4 kann dann z.B. den Verschluss 38 manuell öffnen. In einem anderen Ausführungsbeispiel ist der Verschluss 38 durch den Aktuator 36 bewegbar. Dafür kann der Aktuator 38 z.B. einen Schrittmotor umfassen, der auf den Verschluss 38 einwirkt und diesen von einem geschlossenen und verriegelten Zustand in einen geöffneten Zustand bewegt. Ist der Verschluss 38 beispielsweise als Klappe, Tür, Blende oder Rollladen ausgestalten, kann der Aktuator 38 den Verschluss 38 mehr oder weniger weit öffnen und damit eine mehr oder weniger grosse Öffnung freigeben; ein Rollladen kann beispielsweise je nach Bedarf hochgefahren werden, um z.B. eine Öffnung in Form eines Schlitzes freizugeben. Die Öffnung 10 wird dabei nur so weit wie nötig geöffnet.

In den vorstehend beschriebenen Ausführungsbeispielen erfasst das Lesegerät 2 die Postsendungsdaten der Postsendung 16. In einem weiteren Ausführungsbeispiel eines Assistenzsystems wird die Funktion des Erfassens der Postsendungsdaten zumindest teilweise gebäudeseitig ausgeführt. Dazu ist der in Fig. 5 gezeigte Briefkasten 8 zudem mit einer Kamera 40 ausgestattet, um ein digitales Bild des Adressfeldes 18 zu erzeugen. Die Auswertung des digitalen Bildes erfolgt mit einer OCR Software im Gebäudeserver 12 oder einer anderen Komponente des Briefkastens 8, z.B. der Steuereinrichtung 34. Die Kamera 40 ist durch ein Datennetzwerk 44 (z.B. eine Datenleitung) an den Gebäudeserver 12 gekoppelt.

Damit die Kamera 40 nur dann auslöst, wenn der Zusteller 4 die Postsendung 16 zustellen möchte und nicht kontinuierlich oder irrtümlich durch vorbeilaufende Personen, erkennt das Assistenzsystem, dass der Zusteller 4 in der Nähe des Briefkastens 8 ist. Dazu kann z.B. die Funkeinrichtung 20 verwendet werden, die mit dem Lesegerät 2 kommuniziert, wodurch der Zusteller 4 als solcher identifiziert wird. In einem anderen Ausführungsbeispiel hat der Briefkasten 8 einen Näherungssensor, z.B. einen Ultraschallsensor, der die Anwesenheit des Zustellers 4 detektiert. Der Näherungssensor kann beispielsweise in der Nähe der Kamera 40 angeordnet sein, so dass er die Nähe einer Hand bzw. der Postsendung 16 detektiert, wenn sie nahe der Kamera 40 ist.

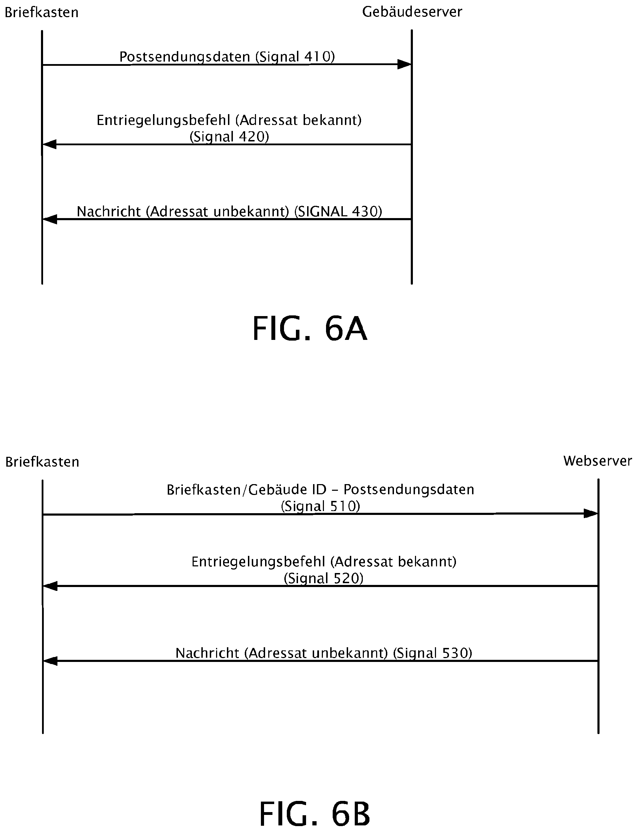

Die Verwendung der in Fig. 5 gezeigten Kamera 40 in einem weiteren Anwendungsbeispiel eines Assistenzsystems ist in Verbindung mit Fig. 6A und Fig. 6B beschrieben. Fig. 6A zeigt ein Signaldiagramm eines beispielhaften Austauschs von Signalen zwischen dem Gebäudeserver 12 und dem Briefkasten 8. In diesem Assistenzsystem positioniert der Zusteller 4 die Postsendung 16 vor der Kamera 40, die ausgelöst wird, wenn die Anwesenheit einer Person mittels eines Näherungssensors oder die des Zustellers 4, wie oben beschrieben, detektiert wird.

Das von der Kamera 40 erzeugte digitale Bild wird durch die OCR Software im Gebäudeserver 12 ausgewertet. Der Briefkasten 8, bzw. eine seiner Komponenten, sendet dazu das digitale Bild mit den Postsendungsdaten zum Gebäudeserver 12 (Signal 410). Hier ist anzumerken, dass zum Gebäudeserver 12 keine Standortdaten übermittelt werden, weil der Standort des Briefkastens 8 bekannt ist; er ist z.B. zusammen mit dem Briefkasten 8 im gleichen Gebäude 1 angeordnet ist oder mit dem Gebäude 1 kommunikativ verbunden ist, um gebäudespezifische Funktionen für das Gebäude 1 auszuführen.

Wird in einem Ausführungsbeispiel ein Näherungssensor verwendet, kann zu diesem Zeitpunkt erkannt werden, ob tatsächlich eine Postsendung 16 vor die Kamera 40 gehalten wurde oder missbräuchlich ein anderer Gegenstand. Erkennt die OCR Software z.B. keine Textzeichen im digitalen Bild, wird das digitale Bild gelöscht. Das digitale Bild wird auch gelöscht, wenn die OCR Software zwar Textzeichen erkennt, diese aber keinem typischen Format einer Postanschrift entsprechen. Je nach Ausgestaltung des Briefkastens 8 bzw. des Assistenzsystems kann im zuletzt genannten Fall ein Fehler- oder Warnsignal erzeugt werden, das den Zusteller 4 darauf aufmerksam macht.

Der Gebäudeserver 12 prüft, ob der Adressat in der ihm zugeordneten Datenbank 28 dem Gebäude 1 zugeordnet ist. Ist dies der Fall, ist der Adressat in diesem Gebäude 1 registriert und der Gebäudeserver 12 erzeugt ein Steuersignal, das einem Entriegelungsbefehl entspricht, und sendet es zum Briefkasten 8 (Signal 420). Daraufhin ist der Briefkasten 8 entriegelt und geöffnet und der Zusteller 4 kann die Postsendung 16 im Briefkasten 8 deponieren. Ist der Adressat dagegen nicht im Gebäude 1 registriert bzw. unbekannt, wird der Zusteller 4 darüber informiert, beispielsweise sendet der Gebäudeserver 12 ein Steuersignal zum Briefkasten 2 (Signal 430), um durch ein optisches oder akustisches Signal dem Zusteller 4 einen Fehler oder eine Warnung zu signalisieren.

In einem anderen Ausführungsbeispiel kommuniziert der Briefkasten 8 nicht mit dem Gebäudeserver 12, sondern mit dem Webserver 6. Fig. 6B zeigt dazu ein Signaldiagramm eines beispielhaften Austauschs von Signalen zwischen dem Webserver 12 und dem Briefkasten 8. Der Ermittlung der Postsendungsdaten einschliesslich dem Adressaten der Postsendung 16 erfolgt wie z.B. in Verbindung mit Fig. 6A beschrieben. Zusätzlich dazu sendet der Briefkasten 8 seine Kennung oder die des Gebäudes 1 zum Webserver 6 (Signal 510). Damit kann der Webserver 6 den Standort des Briefkastens 8 bzw. des Gebäudes 1 ermitteln. Der Webserver 6 prüft, ob der Adressat in der ihm zugeordneten Datenbank 32 dem Gebäude 1 zugeordnet ist und sendet - ähnlich wie in Fig. 6A gezeigt - ein Steuersignal (Signal 520) oder ein Fehler-/Warnsignal zum Briefkasten 8.

In der vorhergehenden Beschreibung der Technologie in Verbindung mit Fig.1 - Fig. 6B umfasst das Lesegerät 2 die Kamera 14. Dies hat den Vorteil, dass die Postsendungen 16 in herkömmlicher Weise mit einer Adresse versehen werden können, ohne dass eine zusätzliche Bearbeitung der Postsendungen 16 (z.B. durch Anbringen einer Codemarkierung) erforderlich ist. Ausserdem kann die Adresse wie bisher auch vom Zusteller 4 gelesen werden. Dies kann dann hilfreich sein, wenn der Zusteller 4 die Adresse evtl. manuell einzugeben hat. Wenn auf einer Postsendung 16 die Anschrift zusätzlich oder ausschliesslich in codierter Form, z.B. als optischer Strichcode, vorliegt, kann die Kamera 14 als Scanner verwendet werden. Eine dazugehörige Softwareanwendung wertet den gescannten Code dann aus, um Daten der Postsendung 16, insbesondere die Anschrift, zu ermitteln.

Eine Postsendung 16 kann auch mit einem elektronischen Etikett ausgestattet sein, auf dem Postsendungsdaten mittels eines Speicherchips gespeichert und von einem dafür vorgesehenen Lesegerät lesbar sind. Die Postsendungsdaten können auch Angaben über die Art (z.B. Einzelbrief, Zeitschrift, Paket oder Bündel von Briefen) der Postsendung 16 und ihrer Grösse oder Volumen umfassen Das elektronische Etikett kann z.B. ein auf RFID Technologie basierendes Funketikett sein. Die Postsendungsdaten sind auf einem Chip gespeichert. Um die Postsendungsdaten von einem solchen Etikett lesen zu können, ist das das Lesegerät 2 mit einem RFID Leser ausgestattet.

In den hier beschriebenen Ausführungsbeispielen kommen Kommunikationseinrichtungen und Kommunikationsnetzwerk zur Anwendung, die für den Betrieb gemäss unterschiedlichen Technologien ausgelegt sind. Es können beispielsweise einzelne oder mehrere Netzwerkprotokolle (z.B. Ethernet, ATM) verwendet werden. Es können auch einzelne oder mehrere Funknetztechnologien verwendet werden, beispielsweise ZigBee nach dem Standard IEEE 802.15.4, Wireless Local Area Network (WLAN) nach dem Standard IEEE802.11, Worldwide Interoperability for Microwave Access (WIMAX) nach dem Standard IEEE802.16 mit einer Reichweite von mehreren 100 Metern bis zu mehreren 10 Kilometern. Die vom Funknetz verwendete Funkfrequenz liegt bei einem WLAN beispielsweise im 2.4 GHz-Band oder im 5.0 GHz-Band und bei WIMAX im 10 bis 66 GHz-Band.

## Patentansprüche

1. Verfahren zum Betreiben eines Postzustellungsassistenzsystems, das einen Briefkasten (8) zur Aufnahme von Postsendungen (16), eine Datenverarbeitungseinrichtung (6, 12) mit einer Datenbank (28, 32), die eine Adressendatei umfasst, in der jeweils ein Adressat einer Gebäudeadresse zugeordnet ist, und ein Lesegerät (2) zum Erfassen von Postsendungsdaten einer Postsendung (16) umfasst, wobei das Verfahren für eine Zustellung einer an einen Adressaten adressierte Postsendung (16) an einem Gebäude (1) folgende Schritte aufweist:
Erfassen von Postsendungsdaten einer Postsendung (16) durch das Lesegerät (2);
Bestimmen eines Adressaten der Postsendung (16) basierend auf den Postsendungsdaten;
Bestimmen eines Standorts des Lesegeräts (2), wobei dem Standort des Lesegeräts (2) die Gebäudeadresse zugeordnet wird,
Prüfen durch die Datenverarbeitungseinrichtung (6, 12), ob der Adressat der Postsendung (16) in der Adressendatei der dem Standort des Lesegeräts (2) zugeordneten Gebäudeadresse des Gebäudes (1) zugeordnet ist; und,
wenn der Adressat in der Adressendatei der dem Standort des Lesegeräts (2) zugeordneten Gebäudeadresse des Gebäudes (1) zugeordnet ist, Aktivieren eines Verriegelungsmechanismus des Briefkastens (8), um eine Öffnung (10) des Briefkastens (8) freizugeben, damit die Postsendung (16) im Briefkasten (8) deponiert werden kann.

2. Verfahren nach Anspruch 1, wobei die Standortbestimmung umfasst:
Empfangen einer Kennung des Gebäudes (1) durch das Lesegerät (2);
Bestimmen von Standortdaten des Gebäudes (1), in dem ermittelt wird, welchem Gebäude die Kennung in einer Datenbank zugeordnet ist; und
Senden der Standortdaten an das Lesegerät (2).

3. Verfahren nach Anspruch 2, ausserdem aufweisend:
Senden der Standortdaten und der Postsendungsdaten durch das Lesegerät (2) an die Datenverarbeitungseinrichtung (6);
Erzeugen eines Entriegelungssignals für den Verriegelungsmechanismus durch die Datenverarbeitungseinrichtung (6), wenn der Adressat in der Adressendatei der Gebäudeadresse des Gebäudes (1) zugeordnet ist.

4. Verfahren nach einem der Ansprüche 2 - 3, ausserdem aufweisend Erzeugen eines digitalen Bildes eines Adressfeldes (18) der Postsendung (16) durch eine Digitalkamera (14) des Lesegeräts (2), wobei das digitale Bild des Adressfeldes (18) die Postsendungsdaten umfasst, und Auswerten des digitalen Bildes mittels einer Zeichenerkennungs-Softwareanwendung, um daraus den Adressaten zu bestimmen, wobei die Zeichenerkennungs-Softwareanwendung im Lesegerät (2) oder in der Datenverarbeitungseinrichtung (6, 12) ausgeführt wird.

## Claims

1. Method for operating a postal delivery assistance system, comprising a mailbox (8) for receiving mail items (16), a data processing device (6, 12) having a database (28, 32) which comprises an address file in which an addressee is assigned to a building address in each case, and a reading device (2) for acquiring mail item data of a mail item (16), wherein the method involves the following steps for the delivery of a mail item (16) addressed to an addressee in a building (1):
acquisition of mail item data of a mail item (16) via the reading device (2);
determination of an addressee of the mail item (16) based on the mail item data;
determination of a location of the reading device (2), wherein the building address is assigned to the location of the reading device (2),
checking, via the data processing device (6, 12), whether the addressee of the mail item (16) in the address file is assigned to the building address of the building (1) which is assigned to the location of the reading device (2); and,
when the addressee in the address file is assigned to the building address of the building (1) assigned to the location of the reading device (2), activation of a locking mechanism of the mailbox (8) in order to release an opening (10) of the mailbox (8) so that the mail item (16) can be deposited in the mailbox (8).

2. Method according to claim 1, wherein the location determination involves:
receipt, via the reading device (2), of an identifier of the building (1);
determination of location data of the building (1), in which it is determined to which building the identifier is assigned in a database; and
sending of the location data to the reading device (2).

3. Method according to claim 2, further involving:
sending, via the reading device (2), of the location data and the mail item data to the data processing device (6);
generation of an unlocking signal for the locking mechanism, via the data processing device (6), when the addressee in the address file is assigned to the building address of the building (1).

4. Method according to either of claims 2-3, further involving generation of a digital image of an address field (18) of the mail item (16) using a digital camera (14) of the reading device (2), wherein the digital image of the address field (18) comprises the mail item data, and evaluation of the digital image by means of a character recognition software application in order to determine the addressee therefrom, wherein the character recognition software application is executed in the reading device (2) or in the data processing device (6, 12).

## Revendications

1. Procédé permettant de faire fonctionner un système d'assistance à la distribution du courrier comprenant une boîte aux lettres (8) destinée à recevoir des envois postaux (16), un dispositif de traitement de données (6, 12) comportant une base de données (28, 32) qui comprend un fichier d'adresses dans lequel respectivement un destinataire est associé à une adresse de bâtiment, et un appareil de lecture (2) destiné à détecter des données d'envoi postal d'un envoi postal (16), dans lequel le procédé présente les étapes suivantes pour une distribution d'un envoi postal (16) adressé à un destinataire à un bâtiment (1) :
détection de données d'envoi postal d'un envoi postal (16) par l'appareil de lecture (2) ;
détermination d'un destinataire de l'envoi postal (16) sur la base des données d'envoi postal ;
détermination d'un emplacement de l'appareil de lecture (2), dans lequel l'adresse de bâtiment est associée à l'emplacement de l'appareil de lecture (2),
vérification, par le dispositif de traitement de données (6, 12), du fait de savoir si le destinataire de l'envoi postal (16) est associé, dans le fichier d'adresses, à l'adresse de bâtiment du bâtiment (1) associée à l'emplacement de l'appareil de lecture (2) ; et,
si le destinataire est associé, dans le fichier d'adresses, à l'adresse de bâtiment du bâtiment (1) associée à l'emplacement de l'appareil de lecture (2), activation d'un mécanisme de verrouillage de la boîte aux lettres (8) pour libérer une ouverture (10) de la boîte aux lettres (8) afin que l'envoi postal (16) puisse être déposé dans la boîte aux lettres (8).

2. Procédé selon la revendication 1, dans lequel la détermination d'emplacement comprend :
la réception d'un identifiant du bâtiment (1) par l'appareil de lecture (2) ;
la détermination de données d'emplacement du bâtiment (1), lors de laquelle l'on détermine à quel bâtiment l'identifiant est associé dans une base de données ; et
l'envoi des données d'emplacement à l'appareil de lecture (2).

3. Procédé selon la revendication 2, présentant en outre :
l'envoi des données d'emplacement et des données d'envoi postal par l'appareil de lecture (2) au dispositif de traitement de données (6) ;
la génération d'un signal de déverrouillage pour le mécanisme de verrouillage par le dispositif de traitement de données (6) lorsque le destinataire est associé à l'adresse de bâtiment du bâtiment (1) dans le fichier d'adresses.

4. Procédé selon l'une des revendications 2 - 3, présentant en outre la génération d'une image numérique d'un champ d'adresse (18) de l'envoi postal (16) par une caméra numérique (14) de l'appareil de lecture (2), dans lequel l'image numérique du champ d'adresse (18) comprend les données d'envoi postal, et l'évaluation de l'image numérique à l'aide d'une application logicielle de reconnaissance de caractères pour déterminer le destinataire à partir de celle-ci, dans lequel l'application logicielle de reconnaissance de caractères est exécutée dans l'appareil de lecture (2) ou dans le dispositif de traitement de données (6, 12).
